# EUROPÄISCHE PATENTSCHRIFT

(11) **EP 2 615 725 B1**
(45) Veröffentlichungstag und Bekanntmachung des Hinweises auf die Patenterteilung: **05.02.2020**
(21) Anmeldenummer: 12008307.6
(22) Anmeldetag: 13.12.2012
(51) Int. Cl.: H02K 5/22, H01R 12/58, H01R 12/71, H01R 13/11, H01R 12/70

(54) **Antriebsvorrichtung, insbesondere für ein elektronisches Haushaltsgerät**
Drive device, in particular for an electric domestic appliance
Dispositif d'entraînement, notamment pour un appareil électroménager

(30) Priorität: 14.12.2011 DE 102011121062
(43) Veröffentlichungstag der Anmeldung: 17.07.2013
(73) Patentinhaber: Diehl AKO Stiftung & Co. KG, 88239 Wangen (DE)
(72) Erfinder: Rapp, Harald, 88353 Kißlegg (DE); Schütz, Artur, 88239 Wangen (DE); Bertoncelj, Bojan, 4228 Zelezniki (SI)
(74) Vertreter: Diehl Patentabteilung

(56) Entgegenhaltungen:
- EP-A1- 0 531 114
- EP-A1- 1 220 422
- EP-A1- 1 523 087
- EP-A1- 1 691 470
- DE-A1-102008 000 124
- US-A- 5 975 963
- US-A1- 2007 149 015

## Beschreibung

Die vorliegende Erfindung betrifft eine Antriebsvorrichtung, insbesondere für ein elektronisches Haushaltsgerät, sowie ein Verfahren zum Zusammenbauen einer solchen Antriebsvorrichtung.

Herkömmliche Waschmaschinen, Trockner und dergleichen elektronische Haushaltsgeräte weisen eine innerhalb eines Gehäuses frei drehbare Wäschetrommel und eine Antriebsvorrichtung zum Drehen der Wäschetrommel auf. Die Antriebsvorrichtung weist einen Elektromotor zum Antreiben der Wäschetrommel und eine Steuervorrichtung zum Steuern der Drehzahl des Elektromotors, um die Rotationsgeschwindigkeit der Wäschetrommel zu steuern, auf. Zur Vereinfachung der Montage und zur Reduzierung des Verkabelungsaufwandes ist es in diesem Zusammenhang ferner bekannt, die Steuervorrichtung an dem Elektromotor zu montieren, um eine integrierte Baueinheit zu schaffen.

Die EP 2 063 011 B1 offenbart ein elektrisches Haushaltsgerät, bei welchem das elektronische Steuermodul zum Steuern der Drehzahl des Elektromotors in den Elektromotor integriert ist. Zum Herstellen einer elektrischen Verbindung zwischen dem Elektromotor und dem Steuermodul ist an einem Gehäuse des Elektromotors ein erster Stecker befestigt und ist an einem Gehäuse des Steuermoduls ein zweiter Stecker befestigt. Beim Montieren des Steuermoduls an dem Elektromotor greifen der erste und der zweite Stecker ineinander und werden über eine Schnappverbindung in Eingriff gehalten.

Die EP 1 523 087 A1 offenbart einen Elektromotor mit daran befestigtem Elektronikgehäuse, das eine Elektronik zum Steuern des Elektromotors aufnimmt. Die Statorwicklung des Elektromotors ist über ein Verbindungskabel, das durch eine Durchgangsbohrung in der Statorplatte aus dem Inneren des Motorgehäuses herausgeführt ist, mit einem Verbindungsstecker im Unterteil des Elektronikgehäuses verbunden.

Die DE 10 2008 000 124 A1 offenbart einen elektromotorisch angetriebenen Kompressor, der ein Kompressortriebwerk, einen Elektromotor zum Antrieb des Kompressortriebwerks und eine Steuerschaltung für den Elektromotor umfasst. Die Stator-Anschlussplatte des Elektromotors und die Steuerschaltung weisen jeweils Steckkontakthülsen auf, die mittels das Motorgehäuse durchdringenden, komplementären Steckkontaktstiften miteinander verbunden sind.

Darüber hinaus sind elektrisch leitende Steckverbindungen bekannt, die aus ineinandergreifenden Flachsteckhülsen und Flachsteckern gebildet sind. Beispielhaft wird diesbezüglich auf die US 5,975,963 A, die EP 0 531 114 A1 und die US 2007/0149015 A1 verwiesen.

Die EP 1 691 470 A1 beschreibt einen Synchronmotor für Waschmaschinen, an dem eine Steuervorrichtung montiert ist. Die Leiterplatte der Steuervorrichtung ist an einem Kühlkörper gehalten, der am Stator des Motors montiert ist. Die elektrische Verbindung zwischen Steuervorrichtung und Motor erfolgt über Flachstecker am Stator, die in Flachsteckhülsen an der dem Motor zugewandten Seite der Leiterplatte eingreifen.

Es ist die Aufgabe der vorliegenden Erfindung, eine verbesserte Antriebsvorrichtung mit einer verbesserten elektrischen Verbindung zwischen Elektromotor und Steuervorrichtung und mit kompakter Bauweise zu schaffen.

Diese Aufgabe wird gelöst durch eine Antriebsvorrichtung mit den Merkmalen des Anspruches 1 bzw. ein Verfahren zum Zusammenbauen einer Antriebsvorrichtung mit den Merkmalen des Anspruches 6. Vorteilhafte Ausgestaltungen und Weiterbildungen der Erfindung sind Gegenstand der jeweiligen Unteransprüche.

Die erfindungsgemäße Antriebsvorrichtung weist einen Elektromotor zum Antreiben wenigstens eines Aggregats und eine Steuervorrichtung mit einer Leiterplatte, auf welcher eine Steuerelektronik zum Ansteuern des Elektromotors vorgesehen ist, auf, wobei die Steuervorrichtung wenigstens ein erstes elektrisches Anschlusselement aufweist, welches mit einem zweiten elektrischen Anschlusselement des Elektromotors elektrisch leitend verbunden ist. Bei dieser Antriebsvorrichtung ist das erste elektrische Anschlusselement als eine Flachsteckhülse ausgebildet und auf der Leiterplatte der Steuervorrichtung montiert und ist das zweite elektrische Anschlusselement als ein Flachstecker ausgebildet, welcher in das erste elektrische Anschlusselement dieses kontaktierend eingreift.

Die Steuervorrichtung ist an einem Lagerendschild des Elektromotors montiert. Durch diese integrierte Bauweise reduzieren sich der Platzbedarf und der Verkabelungsaufwand.

Die elektrische Verbindung zwischen der Steuervorrichtung und dem Elektromotor erfolgt über erste und zweite elektrische Anschlusselemente, die als Flachsteckhülse bzw. Flachstecker ausgebildet sind. Diese Kombination aus Flachsteckhülse und Flachstecker ermöglicht eine lötfreie Steckverbindung, welche beim Montieren der Steuervorrichtung an dem Elektromotor einfach herzustellen ist.

Die so gestaltete elektrische Steckverbindung ist außerdem lösbar, sodass die Steuervorrichtung bei Bedarf (z.B. zu Wartungs- oder Reparaturzwecken) ohne großen Aufwand von dem Elektromotor demontiert werden kann.

Die ersten und zweiten elektrischen Anschlusselemente in Form von Flachsteckhülse bzw. Flachstecker sind zudem relativ kostengünstig.

Das als Flachsteckhülse ausgebildete erste elektrische Anschlusselement ist auf der Leiterplatte der Steuervorrichtung montiert. Auf diese Weise können (z.B. im Vergleich zum Lösungsvorschlag der EP 2 063 011 B1) ein zusätzlicher Stecker und ein Herausführen der elektrischen Leitungen aus dem Gehäuse der Steuervorrichtung entfallen. Hierdurch kann die Antriebsvorrichtung kostengünstiger gestaltet werden.

Weiter ermöglicht die Ausgestaltung der ersten und zweiten elektrischen Anschlusselemente als Flachsteckhülse bzw. Flachstecker die Bildung einer flexiblen elektrischen Verbindung zwischen Steuervorrichtung und Elektromotor. Die elektrische Verbindung ist damit selbst bei Relativbewegungen zwischen Steuervorrichtung und Elektromotor (insbesondere während des Betriebes der Antriebsvorrichtung) stets gewährleistet und nur geringeren Belastungen ausgesetzt.

Gemäß der Erfindung ist das als Flachsteckhülse ausgebildete erste elektrische Anschlusselement im Wesentlichen auf einer dem Elektromotor abgewandten Seite der Leiterplatte angeordnet und greift das als Flachstecker ausgebildete zweite elektrische Anschlusselement durch eine Öffnung in der Leiterplatte hindurch in das erste elektrische Anschlusselement ein. Die Anordnung des ersten elektrischen Anschlusselements auf der dem Elektromotor abgewandten Seite der Leiterplatte ermöglicht einen kompakten Aufbau der elektrischen Verbindung zwischen Steuervorrichtung und Elektromotor und damit der gesamten Antriebsvorrichtung. Das erste elektrische Anschlusselement ist im Wesentlichen auf der dem Elektromotor abgewandten Seite der Leiterplatte angeordnet, d.h. ein Teil des ersten Anschlusselements kann auch innerhalb der Leiterplattenebene oder auf der dem Elektromotor zugewandten Seite der Leiterplatte angeordnet sein. Vorzugsweise befindet sich zumindest der Kontaktabschnitt des ersten elektrischen Anschlusselements auf der dem Elektromotor abgewandten Seite der Leiterplatte. Die elektrische Kontaktierung des ersten Anschlusselements an die Leiterplatte kann auf der dem Elektromotor abgewandten Seite der Leiterplatte, auf der dem Elektromotor zugewandten Seite der Leiterplatte oder innerhalb der Leiterplattenebene ausgeführt sein.

Die erfindungsgemäße Antriebsvorrichtung ist insbesondere für elektronische Haushaltsgeräte geeignet, ohne auf diese Anwendung beschränkt zu sein. Zu diesen elektronischen Haushaltsgeräten zählen insbesondere Wäschebehandlungsgeräte wie Waschmaschinen, Wäschetrockner und kombinierte Waschtrockner. In diesen Fällen ist das von dem Elektromotor anzutreibende Aggregat typischerweise eine Wäschetrommel.

Der Begriff "Flachstecker" bezeichnet eine Form eines elektrischen Anschlusselements mit einem Kontaktabschnitt, der einen im Wesentlichen rechteckigen Querschnitt aufweist, wobei die Dicke deutlich kleiner als die Breite und die Länge des Kontaktabschnitts bemessen ist. Der rechteckige Querschnitt des Flachsteckers kann dabei rechtwinklige Ecken, abgerundete Ecken oder gefaste Ecken haben. Der Kontaktabschnitt des Flachsteckers ist aus einem elektrisch leitenden Material gebildet und weist keine elektrische Isolierung auf.

Der Begriff "Flachsteckhülse" bezeichnet eine Form eines elektrischen Anschlusselements, welches geeignet ist, einen Flachstecker in dessen Längsrichtung zumindest teilweise aufzunehmen und vorzugsweise mit einer Klemmwirkung darin zu halten. Zu diesem Zweck weist die Flachsteckhülse vorzugsweise einen im Wesentlichen rechteckigen Einschubkanal auf, welcher nicht notwendigerweise an allen Seiten geschlossen sein muss. Die Flachsteckhülse ist mit einem Kontaktabschnitt zum Kontaktieren des Kontaktabschnitts des Flachsteckers versehen, der aus einem elektrisch leitenden Material gebildet ist und keine elektrische Isolierung aufweist. Die Kontaktierung zwischen Flachsteckhülse und Flachstecker erfolgt vorzugsweise an den flachen Hauptseiten des Flachsteckers. Die Kontaktierung zwischen Flachsteckhülse und Flachstecker erfolgt vorzugsweise automatisch beim Einschieben des Flachsteckers in die Flachsteckhülse.

Die Montage der Flachsteckhülse auf der Leiterplatte der Steuervorrichtung umfasst in diesem Zusammenhang beliebige dauerhafte oder lösbare Befestigungsverfahren. Vorzugsweise ist die wenigstens eine Flachsteckhülse mit der Leiterplatte verlötet.

Die Antriebsvorrichtung enthält wenigstens ein erstes Anschlusselement, d.h. ein, zwei, drei, vier oder mehr erste Anschlusselemente. Die Antriebsvorrichtung enthält vorzugsweise eine entsprechende Anzahl von zweiten Anschlusselementen auf der Seite des Elektromotors, sodass jeweils ein erstes Anschlusselement mit einem zweiten Anschlusselement in Eingriff steht. Grundsätzlich sind aber auch Ausführungsformen denkbar, bei denen ein zweites Anschlusselement mit mehreren ersten Anschlusselementen in Kontakt steht oder umgekehrt.

In einer bevorzugten Ausgestaltung der Erfindung weist das als Flachstecker ausgebildete zweite elektrische Anschlusselement wenigstens einen zweiten Kontaktabschnitt auf und weist das als Flachsteckhülse ausgebildete erste elektrische Anschlusselement wenigstens eine Federzunge mit wenigstens einem ersten Kontaktabschnitt auf, welche in Richtung quer zu einer Längsachse des als Flachstecker ausgebildeten zweiten elektrischen Anschlusselements zu diesem vorgespannt ist. Die Vorspannung der Kontaktfederzunge in Richtung quer zur Längsachse des Flachsteckers gewährleistet einen dauerhaften, sicheren elektrischen Kontakt zwischen den Kontaktabschnitten der ersten und zweiten Anschlusselemente, und dies selbst bei Relativbewegungen zwischen der Steuervorrichtung und dem Elektromotor.

In einer weiteren bevorzugten Ausgestaltung der Erfindung weist das als Flachsteckhülse ausgebildete erste elektrische Anschlusselement wenigstens einen ersten Kontaktabschnitt auf; weist das als Flachstecker ausgebildete zweite elektrische Anschlusselement wenigstens einen zweiten Kontaktabschnitt auf; und überlappen sich der erste Kontaktabschnitt des ersten elektrischen Anschlusselements und der zweite Kontaktabschnitt des zweiten elektrischen Anschlusselements in Richtung parallel zu einer Längsachse des als Flachstecker ausgebildeten zweiten elektrischen Anschlusselements in einem montierten Ruhezustand um ein vorbestimmtes Maß. Die gegenseitige Überlappung der Kontaktabschnitte der ersten und zweiten Anschlusselemente in der Längsrichtung des Flachsteckers gewährleistet einen dauerhaften, sicheren elektrischen Kontakt zwischen den Kontaktabschnitten der ersten und zweiten Anschlusselemente, und dies selbst bei Relativbewegungen zwischen der Steuervorrichtung und dem Elektromotor.

Unter dem Begriff "Überlappung" ist in diesem Zusammenhang jede Konstruktion zu verstehen, die gewährleistet, dass der erste Kontaktabschnitt des ersten Anschlusselements und der zweite Kontaktabschnitt des zweiten Anschlusselements über ein vorbestimmtes relatives Verschiebemaß zwischen dem ersten und dem zweiten Anschlusselement parallel zur Längsrichtung des als Flachstecker ausgebildeten zweiten Anschlusselements hinweg einander elektrisch leitend kontaktieren. Das Überlappen soll dabei auch Ausführungsformen umfassen, bei denen einer des ersten und des zweiten Kontaktabschnitts in Richtung parallel zur Längsrichtung des als Flachstecker ausgebildeten zweiten Anschlusselements eine deutlich größere Ausdehnung als der andere des ersten und des zweiten Kontaktabschnitts hat und den anderen des ersten und des zweiten Kontaktabschnitts in jeder Kontaktstellung beidseitig überragt, sodass innerhalb eines vorbestimmten Relativstellungsbereiches zwischen erstem und zweitem Anschlusselement eine elektrisch leitende Verbindung zwischen diesen gewährleistet ist.

In einer noch weiteren bevorzugten Ausgestaltung der Erfindung ist das als Flachsteckhülse ausgebildete erste elektrische Anschlusselement als ein einteiliges Biegestanzteil gefertigt. Die als einteiliges Biegestanzteil ausgeführte Flachsteckhülse stellt ein kostengünstig herstellbares erstes elektrisches Anschlusselement dar.

In einer noch weiteren bevorzugten Ausgestaltung der Erfindung sind das als Flachsteckhülse ausgebildete erste elektrische Anschlusselement und das als Flachstecker ausgebildete zweite elektrische Anschlusselement im Wesentlichen senkrecht zur Ebene der Leiterplatte ausgerichtet. Diese Ausrichtung der ersten und zweiten elektrischen Anschlusselemente ermöglicht eine einfache Steckverbindung während der Montage der Steuervorrichtung an dem Elektromotor.

Bei dem erfindungsgemäßen Verfahren zum Zusammenbauen einer Antriebsvorrichtung, welche einen Elektromotor zum Antreiben wenigstens eines Aggregats und eine Steuervorrichtung mit einer Leiterplatte, auf welcher eine Steuerelektronik zum Ansteuern des Elektromotors vorgesehen ist, aufweist, wird wenigstens ein erstes elektrisches Anschlusselement der Steuervorrichtung elektrisch leitend mit einem zweiten elektrischen Anschlusselement des Elektromotors verbunden, wobei das erste elektrische Anschlusselement als eine Flachsteckhülse ausgebildet und auf der Leiterplatte der Steuervorrichtung montiert ist und das zweite elektrische Anschlusselement als ein Flachstecker ausgebildet ist, welcher beim Montieren der Steuervorrichtung an dem Elektromotor in das erste elektrische Anschlusselement der Steuervorrichtung dieses kontaktierend eingreift. Erfindungsgemäß wird die Steuervorrichtung an einem Lagerendschild des Elektromotors montiert. Außerdem ist das als Flachsteckhülse ausgebildete erste elektrische Anschlusselement im Wesentlichen auf einer dem Elektromotor abgewandten Seite der Leiterplatte angeordnet und greift das als Flachstecker ausgebildete zweite elektrische Anschlusselement beim Montieren der Steuervorrichtung an dem Elektromotor durch eine Öffnung in der Leiterplatte hindurch in das erste elektrische Anschlusselement ein.

Die oben in Zusammenhang mit der Antriebsvorrichtung der Erfindung erläuterten Vorteile, Begriffsdefinitionen und bevorzugten Ausgestaltungen gelten für dieses Verfahren zum Zusammenbauen einer Antriebsvorrichtung in entsprechender Weise.

Obige sowie weitere Merkmale und Vorteile der Erfindung werden aus der nachfolgenden Beschreibung eines bevorzugten, nicht-einschränkenden Ausführungsbeispiels unter Bezugnahme auf die beiliegenden Zeichnungen besser verständlich. Darin zeigen:
- Fig. 1: eine schematische Perspektivansicht einer Antriebsvorrichtung gemäß einem Ausführungsbeispiel der vorliegenden Erfindung;
- Fig. 2: eine vergrößerte Perspektivansicht der Einzelheit X von Fig. 1;
- Fig. 3A: eine schematische Seitenansicht der elektrischen Anschlusselemente der Antriebsvorrichtung von Fig. 1 und 2; und
- Fig. 3B: eine schematische Seitenansicht eines ersten elektrischen Anschlusselements der Antriebsvorrichtung von Fig. 1 und 2 im entspannten Ausgangszustand.

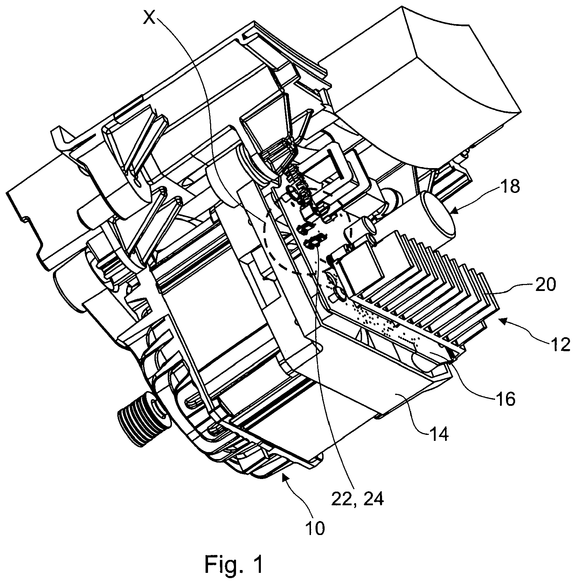

In Figur 1 ist eine Antriebsvorrichtung für eine Wäschetrommel einer Waschmaschine oder einen Wäschetrockner als ein Ausführungsbeispiel der Erfindung dargestellt.

Die Antriebsvorrichtung weist einen Elektromotor 10 und eine Steuervorrichtung 12 auf. Die Steuervorrichtung 12 ist dabei an einem Lagerendschild 14 des Elektromotors befestigt, um eine integrierte Baueinheit aus Elektromotor und Steuervorrichtung zu schaffen. Diese Antriebsvorrichtung ist dann in einem Gehäuse der Waschmaschine / des Wäschetrockners eingebaut und dient dem Antreiben der Wäschetrommel mit vorbestimmten Rotationsgeschwindigkeiten, die je nach gewähltem Programm und Programmablauf geregelt werden.

Die Steuervorrichtung 12 weist eine Leiterplatte 16 auf, auf der eine Steuerelektronik 18 zum Ansteuern des Elektromotors 10 montiert ist. An der Leiterplatte 16 sind zudem Kühlrippen 20 angeordnet, um die insbesondere von der Leistungselektronik erzeugte Wärme abzuführen. Wie in Fig. 1 dargestellt, sind die Steuerelektronik 18 und die Kühlrippen 20 bevorzugt auf der dem Elektromotor 10 abgewandten Seite der Leiterplatte 14 angeordnet.

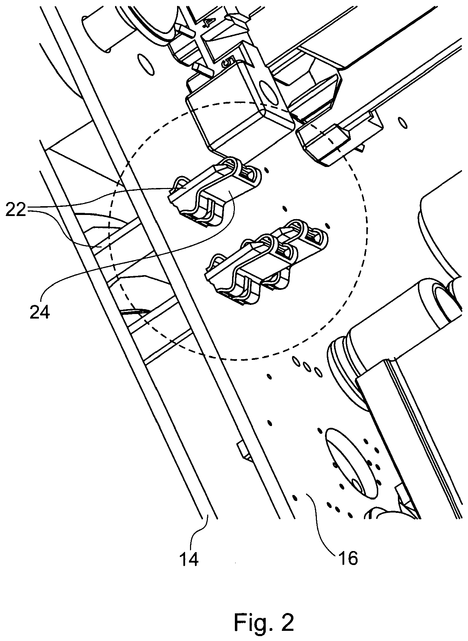

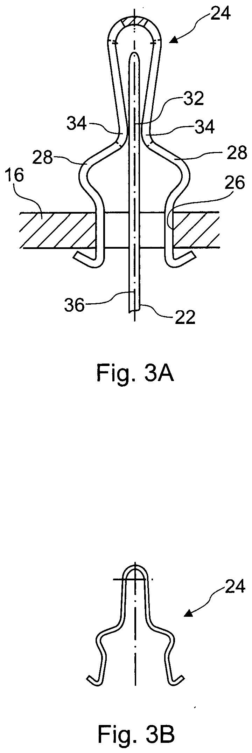

Die elektrische Verbindung zwischen der Steuerelektronik 18 und dem Elektromotor 10 erfolgt über mehrere (in diesem Ausführungsbeispiel drei) erste Anschlusselemente 24 auf der Elektronikseite und entsprechend mehrere (in diesem Ausführungsbeispiel drei) zweite Anschlusselemente 22 auf der Motorseite. Diese ersten und zweiten Anschlusselemente 22, 24 werden nachfolgend Bezug nehmend auf Fig. 2 und 3 näher erläutert.

Die ersten elektrischen Anschlusselemente 24 auf der Elektronikseite sind jeweils als einteiliges Biegestanzteil in Form einer Flachsteckhülse ausgebildet. Die Flachsteckhülse 24 besteht aus zwei Federzungen (oder Klemmlaschen) 28, die miteinander über einen Bogen verbunden sind (oben in Fig. 3A und 3B), sodass sich in Seitenansicht ein im Wesentlichen U-förmiges Bauteil ergibt. Die Flachsteckhülse 24 ist aus einem elektrisch leitenden Material gebildet und weist keine elektrische Isolierung auf. Nach innen aufeinander zu ragende Abschnitte der beiden Federzungen 28 dienen als erste Kontaktabschnitte 34 des ersten Anschlusselements 24.

Die Flachsteckhülsen 24 sind von der dem Elektromotor 10 zugewandten Seite der Leiterplatte 16 durch eine Öffnung bzw. Durchbrechung 26 in der Leiterplatte 16 durch diese hindurch geschoben, sodass die ersten Kontaktabschnitte 34 der Federzungen 28 auf der dem Elektromotor 10 abgewandten Seite der Leiterplatte 16 positioniert sind. Die Federzungen 28 der Flachsteckhülse 24 werden dann mit ihren freien Enden auf der dem Elektromotor 10 zugewandten Seite der Leiterplatte 16 mit dieser verlötet. Ein Vergleich der Fig. 3A (eingebauter Zustand) und der Fig. 3B (entspannter Fertigungszustand) zeigt, dass die Federzungen 28 in dem an der Leiterplatte 16 montierten Zustand der Flachsteckhülse 24 mit ihren ersten Kontaktabschnitten 34 aufeinander zu vorgespannt sind. Die Vorspannkraft ist dabei abhängig von der Größe der Öffnung 26 in der Leiterplatte 16 und der Form der Flachsteckhülse 24.

Die zweiten elektrischen Anschlusselemente 22 auf der Motorseite sind jeweils in Form eines Flachsteckers ausgebildet. Die Flachstecker 22 schieben sich beim Montieren der Steuervorrichtung 12 an dem Lagerendschild 14 des Elektromotors 10 durch die Öffnungen 26 in der Leiterplatte 16 hindurch in die Flachsteckhülsen 24. Die Flachstecker 22 und die Flachsteckhülsen 24 sind im Wesentlichen senkrecht zur Leiterplattenebene ausgerichtet und zueinander ausgerichtet positioniert. Die Flachstecker 22 sind aus einem elektrisch leitenden Material gebildet und weisen keine elektrische Isolierung auf. Die vorderen Endabschnitte der Flachstecker 22 dienen als zweite Kontaktabschnitte 32 der zweiten Anschlusselements 22.

Die Flachstecker 22 können zum Beispiel aus einem Werkzeug hergestellt und auf Umschlag am Elektromotor 10 montiert werden, um die notwendigen Abstände einzuhalten.

Die Dicke der Flachstecker 22 (Maß in Rechts/Links-Richtung in Fig. 3A) ist etwas größer bemessen als der Abstand zwischen den ersten Kontaktabschnitten 34 der Flachsteckhülsen 24, sodass die Flachstecker 22 die Federzungen 28 der Flachsteckhülsen 24 im Bereich der Kontaktabschnitte 34 auseinander drücken. Die ersten Kontaktabschnitte 34 an den Federzungen 28 der Flachsteckhülsen 24 sind dabei durch die Formgebung der Federzungen 28 gegen die zweiten Kontaktabschnitte 32 der Flachstecker 22 vorgespannt, wodurch sich eine gewisse Klemmwirkung ergibt und ein sicherer, elektrisch leitender Kontakt zwischen den Kontaktabschnitten 32, 34 gewährleistet wird.

Zudem ist ein elektrisch leitender Kontakt zwischen den ersten Kontaktabschnitten 34 der Flachsteckhülse 24 und dem zweiten Kontaktabschnitt 32 des Flachsteckers 22 über ein großes relatives Verschiebemaß zwischen Flachstecker 22 und Flachsteckhülse 24 in Richtung parallel zur Längsachse 30 des Flachsteckers 22 (Oben/Unten-Richtung in Fig. 3A) hinweg gewährleistet, da der zweite Kontaktabschnitt 32 des Flachsteckers 22 eine relativ große Ausdehnung in Richtung parallel zur Längsachse 30 des Flachsteckers 22 besitzt. Auf diese Weise wird eine "Überlappung" zwischen den ersten und zweiten Kontaktabschnitten 32, 34 in einem montierten Ruhezustand der ersten und zweiten Anschlusselemente 22, 24 erreicht.

Aufgrund der Vorspannung der Federzungen 28 der Flachsteckhülse 24 gegen den Flachstecker 22 und der Überlappung der ersten und zweiten Kontaktabschnitte 32, 34 in Längsrichtung des Flachsteckers 24 ist eine dauerhafte sichere elektrische Verbindung zwischen Flachstecker 22 und Flachsteckhülse 24 auch bei einer Relativbewegung zwischen der Steuervorrichtung 12 und dem Elektromotor 10 gewährleistet. Die ersten und zweiten elektrischen Anschlusselemente 22, 24 bilden sozusagen eine flexible Steckverbindung, im Gegensatz zum Beispiel zu starren Stecker/Gegenstecker-Verbindungen.

Die Steckverbindung zwischen Flachstecker 22 und Flachsteckhülse 24 ist zudem lötfrei und erfolgt automatisch beim Montieren der Steuervorrichtung 12 an dem Lagerendschild 14 des Elektromotors 10. Die lösbare Steckverbindung ermöglicht zudem ein einfaches Demontieren der Steuervorrichtung 12 zum Beispiel zu Wartungs- und Reparaturzwecken.

## Patentansprüche

1. Antriebsvorrichtung, mit einem Elektromotor (10) zum Antreiben wenigstens eines Aggregats und einer Steuervorrichtung (12) mit einer Leiterplatte (16), auf welcher eine Steuerelektronik (18) zum Ansteuern des Elektromotors (10) vorgesehen ist, wobei die Steuervorrichtung (12) wenigstens ein erstes elektrisches Anschlusselement (24) aufweist, welches mit einem zweiten elektrischen Anschlusselement (22) des Elektromotors (10) elektrisch leitend verbunden ist, wobei das erste elektrische Anschlusselement (24) als eine Flachsteckhülse ausgebildet und auf der Leiterplatte (16) der Steuervorrichtung (12) montiert ist und
das zweite elektrische Anschlusselement (22) als ein Flachstecker ausgebildet ist, welcher in das erste elektrische Anschlusselement (24) dieses kontaktierend eingreift,
**dadurch gekennzeichnet, dass**
die Steuervorrichtung (12) an einem Lagerendschild (14) des Elektromotors (10) montiert ist;
das als Flachsteckhülse ausgebildete erste elektrische Anschlusselement (24) im Wesentlichen auf einer dem Elektromotor (10) abgewandten Seite der Leiterplatte (16) angeordnet ist; und
das als Flachstecker (22) ausgebildete zweite elektrische Anschlusselement (22) durch eine Öffnung (26) in der Leiterplatte (16) hindurch in das erste elektrische Anschlusselement (24) eingreift.

2. Antriebsvorrichtung nach Anspruch 1,
**dadurch gekennzeichnet, dass**
das als Flachstecker ausgebildete zweite elektrische Anschlusselement (22) wenigstens einen zweiten Kontaktabschnitt (32) aufweist; und
das als Flachsteckhülse ausgebildete erste elektrische Anschlusselement (24) wenigstens eine Federzunge (28) mit wenigstens einem ersten Kontaktabschnitt (34) aufweist, welche in Richtung quer zu einer Längsachse (30) des als Flachstecker ausgebildeten zweiten elektrischen Anschlusselements (22) zu diesem vorgespannt ist.

3. Antriebsvorrichtung nach einem der vorhergehenden Ansprüche,
**dadurch gekennzeichnet, dass**
das als Flachsteckhülse ausgebildete erste elektrische Anschlusselement (24) wenigstens einen ersten Kontaktabschnitt (34) aufweist;
das als Flachstecker ausgebildete zweite elektrische Anschlusselement (22) wenigstens einen zweiten Kontaktabschnitt (32) aufweist; und
der erste Kontaktabschnitt (34) des ersten elektrischen Anschlusselements (24) und der zweite Kontaktabschnitt (32) des zweiten elektrischen Anschlusselements (22) sich in Richtung parallel zu einer Längsachse (30) des als Flachstecker ausgebildeten zweiten elektrischen Anschlusselements (22) in einem montierten Ruhezustand ein vorbestimmtes Maß überlappen.

4. Antriebsvorrichtung nach einem der vorhergehenden Ansprüche,
**dadurch gekennzeichnet, dass**
das als Flachsteckhülse ausgebildete erste elektrische Anschlusselement (24) als ein einteiliges Biegestanzteil gefertigt ist.

5. Antriebsvorrichtung nach einem der vorhergehenden Ansprüche,
**dadurch gekennzeichnet, dass**
das als Flachsteckhülse ausgebildete erste elektrische Anschlusselement (24) und das als Flachstecker ausgebildete zweite elektrische Anschlusselement (22) im Wesentlichen senkrecht zur Ebene der Leiterplatte (16) ausgerichtet sind.

6. Verfahren zum Zusammenbauen einer Antriebsvorrichtung, welche einen Elektromotor (10) zum Antreiben wenigstens eines Aggregats und eine Steuervorrichtung (12) mit einer Leiterplatte (16), auf welcher eine Steuerelektronik (18) zum Ansteuern des Elektromotors (10) vorgesehen ist, aufweist, bei welchem wenigstens ein erstes elektrisches Anschlusselement (24) der Steuervorrichtung (12) elektrisch leitend mit einem zweiten elektrischen Anschlusselement (22) des Elektromotors (10) verbunden wird, wobei das erste elektrische Anschlusselement (24) als eine Flachsteckhülse ausgebildet und auf der Leiterplatte (16) der Steuervorrichtung (12) montiert ist und das zweite elektrische Anschlusselement (22) als ein Flachstecker ausgebildet ist, welcher beim Montieren der Steuervorrichtung (12) an dem Elektromotor (10) in das erste elektrische Anschlusselement (24) der Steuervorrichtung (12) kontaktierend eingreift,
**dadurch gekennzeichnet, dass**
die Steuervorrichtung (12) an einem Lagerendschild (14) des Elektromotors (10) montiert wird;
das als Flachsteckhülse ausgebildete erste elektrische Anschlusselement (24) im Wesentlichen auf einer dem Elektromotor (10) abgewandten Seite der Leiterplatte (16) angeordnet ist; und
das als Flachstecker ausgebildete zweite elektrische Anschlusselement (22) beim Montieren der Steuervorrichtung (12) an dem Elektromotor (10) durch eine Öffnung (26) in der Leiterplatte (16) hindurch in das erste elektrische Anschlusselement (24) eingreift.

## Claims

1. Drive device, comprising an electric motor (10) for driving at least one unit and a control device (12) having a circuit board (16), on which control electronics (18) for driving the electric motor (10) are provided, wherein the control device (12) has at least one first electric connecting element (24), which is electrically conductively connected to a second electric connecting element (22) of the electric motor (10), wherein the first electric connecting element (24) is formed as a flat receptacle and is mounted on the circuit board (16) of the control device (12), and
the second electric connecting element (22) is formed as a flat connector, which engages in the first electric connecting element (24), contacting the latter,
**characterized in that**
the control device (12) is mounted on a bearing end shield (14) of the electric motor (10),
the first electric connecting element (24), formed as a flat receptacle, is arranged substantially on a side of the circuit board (16) that faces away from the electric motor (10), and
the second electric connecting element (22), formed as a flat connector (22), engages in the first electric connecting element (24) through an opening (26) in the circuit board (16).

2. Drive device according to Claim 1,
**characterized in that**
the second electric connecting element (22), formed as a flat connector, has at least one second contact section (32), and
the first electric connecting element (24), formed as a flat receptacle, has at least one spring tongue (28) with at least one first contact section (34) which, in the direction transverse to a longitudinal axis (30) of the second electric connecting element (22), formed as a flat connector, is preloaded relative to the latter.

3. Drive device according to either of the preceding claims,
**characterized in that**
the first electric connecting element (24), formed as a flat receptacle, has at least one first contact section (34),
the second electric connecting element (22), formed as a flat connector, has at least one second contact section (32), and
in an assembled rest state, the first contact section (34) of the first electric connecting element (24) and the second contact section (32) of the second electric connecting element (22) overlap by a predetermined amount in the direction parallel to a longitudinal axis (30) of the second electric connecting element (22), formed as a flat connector.

4. Drive device according to one of the preceding claims,
**characterized in that**
the first electric connecting element (24), formed as a flat receptacle, is made as a one-piece bent punched part.

5. Drive device according to one of the preceding claims,
**characterized in that**
the first electric connecting element (24), formed as a flat receptacle, and the second electric connecting element (22), formed as a flat connector, are aligned substantially perpendicular to the plane of the circuit board (16).

6. Method for assembling a drive device which comprises an electric motor (10) for driving at least one unit and a control device (12) having a circuit board (16), on which control electronics (18) for driving the electric motor (10) are provided, in which at least one first electric connecting element (24) of the control device (12) is electrically conductively connected to a second electric connecting element (22) of the electric motor (10), wherein
the first electric connecting element (24) is formed as a flat receptacle and is mounted on the circuit board (16) of the control device (12), and the second electric connecting element (22) is formed as a flat connector which, as the control device (12) is mounted on the electric motor (10), engages in the first electric connecting element (24) of the control device (12), in a contacting manner,
**characterized in that**
the control device (12) is mounted on a bearing end shield (14) of the electric motor (10);
the first electric connecting element (24), formed as a flat receptacle, is arranged substantially on a side of the circuit board (16) that faces away from the electric motor (10), and
as the control device (12) is mounted on the electric motor (10), the second electric connecting element (22), formed as a flat connector, engages in the first electric connecting element (24) through an opening (26) in the circuit board (16).

## Revendications

1. Dispositif d'entraînement comprenant un moteur électrique (10) destiné à entraîner au moins une unité et un dispositif de commande (12) comprenant une carte de circuit imprimé (16) sur laquelle est prévue une électronique de commande (18) destinée à commander le moteur électrique (10), le dispositif de commande (12) comportant au moins un premier élément de connexion électrique (24) qui est relié de manière électriquement conductrice à un deuxième élément de connexion électrique (22) du moteur électrique (10), le premier élément de connexion électrique (24) étant conçu comme une prise à enfichage femelle plate et monté sur la carte de circuit imprimé (16) du dispositif de commande (12) et le deuxième élément de connexion électrique (22) étant conçu comme une prise enfichable mâle plate qui s'engage dans le premier élément de connexion électrique (24) en venant en contact avec celui-ci, **caractérisé en ce que**
le dispositif de commande (12) est monté sur un flasque d'extrémité de palier (14) du moteur électrique (10) ; le premier élément de connexion électrique (24), conçu comme une prise enfichable femelle plate, est disposé sensiblement sur un côté de la carte de circuit imprimé (16) qui est opposé au moteur électrique (10) ; et
le deuxième élément de connexion électrique (22), conçu comme une prise enfichable mâle plate (22), s'engage dans le premier élément de connexion électrique (24) à travers une ouverture (26) de la carte de circuit imprimé (16).

2. Dispositif d'entraînement selon la revendication 1,
**caractérisé en ce que**
le deuxième élément de connexion électrique (22), conçu comme une prise enfichable mâle plate, comporte au moins une deuxième portion de contact (32) ; et le premier élément de connexion électrique (24), conçu comme un prise enfichable femelle plate, comporte au moins une languette élastique (28) qui est pourvue d'au moins une première portion de contact (34) et qui est précontrainte vers le deuxième élément de connexion électrique (22) conçu comme une prise enfichable mâle plate, transversalement à un axe longitudinal (30) de celui-ci.

3. Dispositif d'entraînement selon l'une des revendications précédentes,
**caractérisé en ce que**
le premier élément de connexion électrique (24), conçu comme une prise enfichable femelle plate, comporte au moins une première portion de contact (34) ;
le deuxième élément de connexion électrique (22), conçu comme une prise enfichable mâle plate, comporte au moins une deuxième portion de contact (32) ; et
la première portion de contact (34) du premier élément de connexion électrique (24) et la deuxième portion de contact (32) du deuxième élément de connexion électrique (22) se recouvrent, à l'état de repos monté, dans une mesure prédéterminée dans une direction parallèle à un axe longitudinal (30) du deuxième élément de connexion électrique (22), conçu comme une prise enfichable mâle plate.

4. Dispositif d'entraînement selon l'une des revendications précédentes,
**caractérisé en ce que**
le premier élément de connexion électrique (24), conçu comme une prise enfichable femelle plate, est fabriqué sous la forme d'un élément estampé plié d'une seule pièce.

5. Dispositif d'entraînement selon l'une des revendications précédentes,
**caractérisé en ce que**
le premier élément de connexion électrique (24), conçu comme une prise enfichable femelle plate, et le deuxième élément de connexion électrique (22), conçu comme une prise enfichable mâle plate, sont orientés sensiblement perpendiculairement au plan de la carte de circuit imprimé (16).

6. Procédé d'assemblage d'un dispositif d'entraînement qui comprend un moteur électrique (10) destiné à entraîner au moins une unité et un dispositif de commande (12) comportant une carte de circuit imprimé (16) sur laquelle est prévue une électronique de commande (18) destinée à commander le moteur électrique (10), dispositif d'entraînement dans lequel au moins un premier élément de connexion électrique (24) du dispositif de commande (12) est relié de manière électriquement conductrice à un deuxième élément de connexion électrique (22) du moteur électrique (10),
le premier élément de connexion électrique (24) étant conçu comme une prise enfichable femelle plate et monté sur la carte de circuit imprimé (16) du dispositif de commande (12) et le deuxième élément de connexion électrique (22) étant conçu comme une prise enfichable mâle plate qui s'engage, dans une relation de contact, dans le premier élément de connexion électrique (24) du dispositif de commande (12) lors du montage du dispositif de commande (12) sur le moteur électrique (10),
**caractérisé en ce que**
le dispositif de commande (12) est monté sur un flasque d'extrémité de palier (14) du moteur électrique (10) ; le premier élément de connexion électrique (24), conçu comme une prise enfichable femelle plate, est disposé sensiblement sur un côté de la carte de circuit imprimé (16) qui est opposé au moteur électrique (10) ; et
le deuxième élément de connexion électrique (22), conçu comme une prise enfichable mâle plate, s'engage dans le premier élément de connexion électrique (24) à travers une ouverture (26) de la carte de circuit imprimé (16) lors du montage du dispositif de commande (12) sur le moteur électrique (10).
